(19) 

Europäisches
Patentamt

European
Patent Office

Office européen
des brevets

(11)  **EP 2 250 040 B1**

(12)  **EUROPÄISCHE PATENTSCHRIFT**

(45) Veröffentlichungstag und Bekanntmachung des
Hinweises auf die Patenterteilung:
**18.01.2012  Patentblatt 2012/03**

(21) Anmeldenummer: **08872808.4**

(22) Anmeldetag: **26.11.2008**

(51) Int Cl.:
***B60K 6/48*** *(2007.10)*        ***B60W 10/08*** *(2006.01)*
***B60W 20/00*** *(2006.01)*

(86) Internationale Anmeldenummer:
**PCT/EP2008/066191**

(87) Internationale Veröffentlichungsnummer:
**WO 2009/106171 (03.09.2009 Gazette 2009/36)**

(54) **HYBRIDANTRIEB UND VERFAHREN ZU DESSEN STEUERUNG**

HYBRID DRIVE AND METHOD FOR THE CONTROL THEREOF

ENTRAÎNEMENT HYBRIDE ET PROCÉDÉ DE COMMANDE ASSOCIÉ

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**

(30) Priorität: **28.02.2008  DE 102008011675**

(43) Veröffentlichungstag der Anmeldung:
**17.11.2010  Patentblatt 2010/46**

(73) Patentinhaber: **Robert Bosch GmbH
70442 Stuttgart (DE)**

(72) Erfinder: **SEEL, Andreas
71282 Hemmingen (DE)**

(56) Entgegenhaltungen:
**DE-A1- 19 814 402        FR-A- 2 886 221
US-A1- 2003 001 390**

EP 2 250 040 B1

**Beschreibung**

Stand der Technik

Die Erfindung betrifft einen Hybridantrieb nach dem Oberbegriff des Anspruchs 1. Weiterhin betrifft die Erfindung ein Verfahren für die Steuerung eines Hybridantriebs nach dem Oberbegriff des Anspruchs 5.

Von einem Hybridantrieb verspricht man sich erhebliche Vorteile als Antriebsaggregat für Kraftfahrzeuge. Erste Kraftfahrzeuge mit Hybridantrieb werden bereits in Serie hergestellt. Ein Hybridantrieb für ein Kraftfahrzeug umfasst mindestens einen Verbrennungsmotor und mindestens eine elektrische Maschine (Elektromotor) zwischen denen üblicherweise eine Trennkupplung angeordnet ist. Ein derartiger Hybridantrieb erlaubt ein rein elektrisches Fahren mit dem Elektromotor, wobei die Trennkupplung geöffnet ist und somit kein Moment zwischen dem Verbrennungsmotor und dem Antriebstrang des Fahrzeugs übertragen wird. In diesem Betriebszustand wird der Verbrennungsmotor bevorzugt abgestellt, um Kraftstoff zu sparen. Da der Verbrennungsmotor nicht mehr mit dem Antriebsstrang des Fahrzeugs wirkverbunden ist, überträgt er auch kein negatives Schleppmoment, welches durch den Elektromotor kompensiert werden müsste. Bei einem höheren Leistungsbedarf und/oder mit zunehmender Entladung der den Elektromotor versorgenden Batterie muss der Verbrennungsmotor gestartet werden. Dies kann durch einen so genannten "Schlupfstart" erfolgen, bei dem die Trennkupplung zugefahren und der Verbrennungsmotor so angeschleppt und gestartet wird. Damit bei dem Anschleppen des Verbrennungsmotors kein Zugkrafteinbruch an dem Abtrieb entsteht, wird das Lastmoment des Verbrennungsmotors zweckmäßig auf Seiten des Elektromotors vorgesteuert. Da jedoch die vorgesteuerten Werte in der Praxis häufig nicht genau genug sind, wird bei dem Start des Verbrennungsmotors zusätzlich eine Regelung der Drehzahl vorgenommen. Diese Drehzahlregelung soll bei dem Start des Verbrennungsmotors die Drehzahl des Elektromotors stabil halten, um auf diese Weise einen Zugkrafteinbruch an dem Abtrieb zu vermeiden.

Aus DE 10 2006 048 355.3 ist es bereits bekannt, bei dem Start des Verbrennungsmotors die Solldrehzahl zu verändern, um zum Beispiel bei einem Start des Verbrennungsmotors während eines Beschleunigungsvorgangs einen möglichst ruckfreien Start des Verbrennungsmotors zu ermöglichen. Jedoch stellt es sich in der Praxis als schwierig heraus, in allen möglichen Fahrsituationen eine geeignete Solldrehzahl zu finden, die einen absolut ruckfreien Start des Verbrennungsmotors ermöglicht. Ist die gewählte Solldrehzahl zu hoch, dann spürt der Fahrer dies als kurze unkomfortable Beschleunigung. Ist die Solldrehzahl dagegen zu niedrig, so verzögert das Fahrzeug kurz. Beide Ergebnisse vermindern aber den Fahrkomfort. Aus der gattungsbildende US 2003/001390 ist eine Strategie zum Starten eines Verbrennungsmotors eines Hybridfahrzeuges bekannt, bei dem eine gewünschte Fahrzeuggeschwindigkeit beibehalten wird. Aus der FR 2 886 221 ist ein Verfahren zum Starten eines Verbrennungsmotors bekannt, bei dem der Verbrennungsmotor mit einem Drehmoment eines Starters und einem Drehmoment, welches über eine Kupplung übertragen wird, gestartet wird. Aus der DE 198 14 402 ist ein Verfahren zum Anfahren eines Hybridfahrzeuges bekannt, bei dem ein ruckartiges Ankuppeln des Verbrennungsmotors vermieden wird.

Offenbarung der Erfindung

Technische Aufgabe

Der Erfindung liegt die Aufgabe zugrunde, einen verbesserten Hybridantrieb sowie ein verbessertes Verfahren für die Steuerung eines Hybridantriebs anzugeben, die einen verbesserten Fahrkomfort ermöglichen.

Technische Lösung

Ausgehend von einem Hybridantrieb nach dem Oberbegriff des Anspruchs 1 wird die Schaffung eines verbesserten Hybridantriebs durch die in Anspruch 1 genannten Merkmale gelöst. Ein verbessertes Verfahren für die Steuerung eines Hybridantriebs geht aus Anspruch 6 5 hervor.

Vorteile der Erfindung

Die Erfindung geht dabei von der Erkenntnis aus, dass mittels der erfindungsgemäßen Beschleunigungsregelung nicht nur eine der aktuellen Fahrsituation entsprechende Solldrehzahl bestimmt werden kann, sondern zusätzlich auch noch Ungenauigkeiten in der Vorsteuerung vermieden werden können. Dazu ist, erfindungsgemäß, ein Regler vorgesehen, dem zumindest während eines so genannten Schlupfstarts des Verbrennungsmotors die mit einem Beschleunigungssensor erfasste Beschleunigung des Fahrzeugs zugeführt wird. Vorteilhaft ist dem Regler ein erster Summationsknoten vorgeschaltet, dem eingangsseitig Werte der Istbeschleunigung und Sollbeschleunigung zugeführt werden. Vorteilhaft ist dem Regler ein zweiter Summationsknoten nachgeschaltet, der ausgangsseitig mit dem Elektromotor verbunden ist und dem eingangsseitig das Ausgangssignal des Reglers und der Fahrerwunsch zugeführt werden.

Weitere Vorteile ergeben sich aus der Beschreibung, der Zeichnung und den Unteransprüchen.

Kurze Beschreibung der Zeichnungen

Ausführungsformen der Erfindung werden nachfolgend unter Bezug auf die Zeichnung näher erläutert. Dabei zeigt:

Figur 1    eine schematische Darstellung eines Hybridantriebs mit einer Trennkupplung;

Figur 2    eine schematische Darstellung eines erfindungsgemäß ausgebildeten Hybridantriebs.

Ausführungsformen der Erfindung

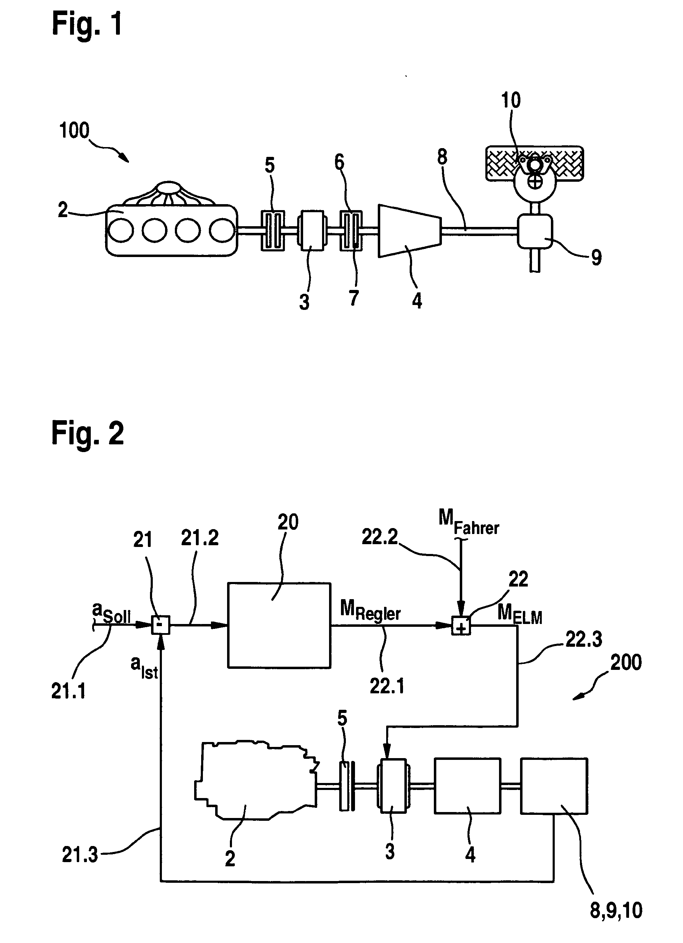

Ausführungsformen der Erfindung werden im Folgenden unter Bezug auf die Zeichnung näher erläutert. Figur 1 zeigt eine schematische Darstellung eines vorteilhaften Hybridantriebs 100 für ein Kraftfahrzeug. Der Hybridantrieb 100 umfasst einen Verbrennungsmotor 2, einen Elektromotor 3 und ein Automatikgetriebe 4, die in einer Reihe angeordnet sind. Zwischen dem Verbrennungsmotor 2 und dem Elektromotor 3 ist eine Trennkupplung 5 angeordnet. Zwischen dem Elektromotor 3 und dem Automatikgetriebe 4 kann noch ein Drehmomentwandler 6 mit einer Überbrückungskupplung 7 angeordnet sein. Von dem weiteren Antriebsstrang des Fahrzeugs sind in Figur 1 schematisch nur noch eine Abtriebswelle 8, die das Automatikgetriebe 4 mit einem Differenzial 9 verbindet und ein Rad 10 dargestellt, auf das das Antriebsmoment des Hybridantriebs 100 übertragen wird. Bei einem rein elektrischen Fahrbetrieb ist die Trennkupplung 5 geöffnet, so dass allein der Elektromotor 3 ein Antriebsmoment auf den Antriebsstrang hervorruft. Wenn der außer Betrieb befindliche Verbrennungsmotor 2 im Fahrbetrieb des Fahrzeugs gestartet werden soll (so genannter "Schlupfstart"), wird die Trennkupplung 5 mit einem definierten Kupplungsmoment geschlossen.

Die erfindungsgemäße Lösung wird im Folgenden anhand eines Ausführungsbeispiels beschrieben, wobei auf Figur 2 Bezug genommen wird, in der wiederum ein Hybridantrieb 200 schematisch dargestellt ist. Die mit den Bezugsziffern 2, 3 und 4 bezeichneten Komponenten des Hybridantriebs entsprechen wiederum den schon in Figur 1 gezeigten. In dem Block 8, 9, 10 sind die in Figur 1 diskret dargestellten Komponenten des Antriebsstrangs zusammengefasst. Mit Bezugsziffer 20 ist ein in Wirkverbindung mit dem Hybridantrieb stehender Regler bezeichnet. Ein Ausgangsanschluss 22.1 des Reglers 20 ist mit einem Summationsknoten 22 verbunden, dem eingangsseitig (22.1, 22.2) ein von dem Fahrer des Fahrzeugs vorgegebenes Moment $M_{Fahrer}$ und ein von dem Regler 20 ausgangsseitig bereitgestelltes Moment $M_{Regler}$ zugeführt werden. Ausgangsseitig ist der Summationsknoten 22 über den Ausgang 22.3 mit dem Elektromotor 3 verbunden. Eingangsseitig (Eingang 21.2) ist der Regler 20 mit einem Summationsknoten 21 verbunden. Dem Summationsknoten 21 werden am Eingang 21.3 der Istwert der Beschleunigung aIst und am Eingang 21.1 der Sollwert der Beschleunigung zugeführt.

Der wesentliche Kern der Erfindung besteht darin, während des Startvorgangs des Verbrennungsmotors eine Beschleunigungsregelung zu aktivieren, wodurch der Fahrkomfort für den Fahrer entscheidend verbessert werden kann. Dabei ist man nicht mehr von einer Solldrehzahl abhängig, die beispielsweise aus einem Wandlermodell in Verbindung mit dem Fahrerwunsch gebildet und während des Startvorgangs auch noch nachgeführt werden muss. Vielmehr stellt sich mit der erfindungsgemäßen Lösung ein Start mit im Wesentlichen konstanter Beschleunigung oder mit einer von dem Fahrerwunsch abhängigen Beschleunigung ein, was vom Fahrer als komfortabel empfunden wird. Für den Startvorgang des Verbrennungsmotors wird ein Regler verwendet, etwa analog zu einem Drehzahlregler, der eine Istbeschleunigung erfasst und diese mit einer Sollbeschleunigung vergleicht. In Abhängigkeit von dem Ergebnis dieses Vergleichs wird das Drehmoment des Elektromotors entsprechend erhöht oder erniedrigt, um auf diese Weise die Sollbeschleunigung einzustellen. Bei Einleitung eines Startvorgangs für den Verbrennungsmotor wird zunächst die aktuell vorliegende Istbeschleunigung gespeichert. Dieser Wert wird dann für den jetzt folgenden Startvorgang als Sollbeschleunigung verwendet. Somit ist sichergestellt, dass die Beschleunigung während des gesamten Startvorgangs konstant ist, was einen ruckfreien Startvorgang zur Folge hat. Für den Fall, dass sich der Fahrerwunsch während des Starts des Verbrennungsmotors verändern sollte, kann, gemäß einer vorteilhaften Weiterbildung der Erfindung, auch die Sollbeschleunigung entsprechend verändert werden, um die Reaktion des Fahrzeugs an diesen Fahrerwunsch anzupassen und dadurch den Startvorgang zu optimieren.

Die Istbeschleunigung kann beispielsweise durch zeitliche Ableitung eines von einem entsprechenden Sensor bereit gestellten Geschwindigkeitssignals gewonnen werden. Sofern das Fahrzeug bereits Sensoren für die Erfassung der Fahrzeugbeschleunigung umfasst, kann selbstverständlich das Ausgangssignal eines derartigen Sensors herangezogen werden. Beispielsweise verfügen mit ESP oder ACC ausgestattete Fahrzeuge bereits über einen Sensor, der die Längsbeschleunigung des Fahrzeugs erfasst. Alternativ kann die Beschleunigung auch über die Raddrehzahlsensoren eines ABS-Systems des Fahrzeugs ermittelt werden.

Um den ggf. erforderlichen softwaremäßigen Aufwand zu reduzieren, kann als Kern des Reglers auch ein bereits vorhandener Leerlaufregler oder Drehzahlregler eingesetzt werden. Die erfassten Beschleunigungswerte können dann, gemäß den folgenden Beziehungen, in Drehzahlwerte bzw. Rampen von Drehzahlwerten umgesetzt werden:

$$(1) \qquad a_{Fzg} = \frac{\dot{r}_{Rad}}{i_{Getriebe}} \omega_{ELM} \; ;$$

$$(2) \qquad n_{Soll,ELM} = \frac{i}{2\pi r} \int a_{Soll,Fzg} \, dt \; .$$

Darin bedeuten:

$a_{Fzg}$         = Längsbeschleunigung des Fahrzeugs

$r_{Rad}$         = Radradius

$I_{Getriebe}$         = Getriebeübersetzung

$\omega_{ELM}$         = Winkelgeschwindigkeit des Elektromotors

$n_{Soll,ELM}$         = Solldrehzahl des Elektromotors

$a_{soll,Fzg}$         = Sollwert der Längsbeschleunigung des Fahrzeugs.

Der wesentliche Kern der Erfindung wird im Folgenden nochmals unter Bezug auf die Darstellung in Figur 2 zusammengefasst. Dem Summationspunkt 21 wird über die Verbindungsleitung 21.3 die Istbeschleunigung $a_{Ist}$ des Fahrzeugs zugeführt, die beispielsweise von einem in dem Fahrzeug vorhandenen Beschleunigungssensor erfasst wird. Dem Summationspunkt 21 wird weiterhin ein Wert der Sollbeschleunigung $a_{Soll}$ zugeführt. Hierbei kann es sich um einen zu einem früheren Zeitpunkt gewonnenen Wert der Istbeschleunigung handeln, der in einer Speichereinrichtung zwischengespeichert worden ist. Das an dem Ausgang des Summationsknotens 21 anstehende Ausgangssignal wird über die Verbindungsleitung 21.2 dem Regler 20 zugeführt, der an seinem Ausgang das Signal $M_{Regler}$ bereitstellt. Dieses Signal $M_{Regler}$ wird über die Verbindungsleitung 22.1 einem ersten Eingang des Summationsknotens 22 zugeführt. Bei einem unveränderten Fahrerwunsch wird über die zu dem Elektromotor 3 führenden Verbindungsleitung 22.3 dann ein entsprechendes Signal bereitgestellt, das die Drehzahl des Elektromotors auf den erforderlichen Wert bringt. Sollte sich zwischenzeitlich der Fahrerwunsch geändert haben, wird dieser in Form des Signals $M_{Fahrer}$ einem zweiten Eingang des Summationsknotens 22 zugeführt. In Abhängigkeit von den beiden dann an den Eingängen des Summationsknotens 22 anliegenden Signalen $M_{Regler}$ und $M_{Fahrer}$ wird dann ein Steuersignal $M_{ELM}$ für den Elektromotor 3 auf der Verbindungsleitung 22.3 bereitgestellt.

**Patentansprüche**

**1.** Hybridantrieb (200) mit mindestens einem Verbrennungsmotor (2) und mindestens einem Elektromotor (3), und einer zwischen dem Verbrennungsmotor (2) und dem Elektromotor (3) angeordneten Kupplung (5), **dadurch gekennzeichnet, dass** der Hybridantrieb (200) einen Regler (20) umfasst, der das Drehmoment des Elektromotors (3) bei einem Schlupfstart des Verbrennungsmotors (2) derart regelt, dass die Beschleunigung des Fahrzeugs während des Starts des Verbrennungsmotors (2) im Wesentlichen konstant bleibt **dadurch gekennzeichnet, dass** der Hybridantrieb (200) einen ersten Summationsknoten (21) umfasst, der ausgangsseitig mit dem Regler (20) verbunden ist und dem eingangsseitig eine Istbeschleunigung und eine Sollbeschleunigung zuführbar sind.

**2.** Hybridantrieb (200) nach Anspruch 1, **gekennzeichnet durch** Mittel für die Erfassung der Fahrzeugbeschleunigung, mit deren Hilfe zumindest während eines Schlupfstarts des Verbrennungsmotors (2) die Beschleunigung des Fahrzeugs erfassbar und dem Eingang eines Reglers (20) zuführbar ist.

3. Hybridantrieb (200) nach einem der vorhergehenden Ansprüche, **dadurch gekennzeichnet, dass** die Mittel für die Erfassung der Beschleunigung einen Beschleunigungssensor umfassen.

4. Hybridantrieb (200) nach einem der vorhergehenden Ansprüche, **dadurch gekennzeichnet, dass** er einen zweiten Summationsknoten (22) umfasst, der ausgangsseitig mit dem Elektromotor (3) verbunden ist, und dem eingangsseitig das Ausgangssignal des Reglers (20) und der Fahrerwunsch zuführbar sind.

5. Verfahren für die Steuerung eines mindestens einen Verbrennungsmotor (2) und einen Elektromotor (3) umfassenden Hybridantriebs (200) für ein Kraftfahrzeug, bei dem das Fahrzeug zumindest zeitweise ausschließlich von dem Elektromotor (3) angetrieben wird und der Verbrennungsmotor (2) im Bedarfsfall durch einen so genannten Schlupfstart gestartet wird, wobei für den Start des Verbrennungsmotors (2) eine Beschleunigungsregelung aktiviert wird **dadurch gekennzeichnet, dass** der Hybridantrieb (200) einen ersten Summationsknoten (21) umfasst, der ausgangsseitig mit dem Regler (20) verbunden wird und dem eingangsseitig eine Istbeschleunigung und eine Sollbeschleunigung zugeführt wird.

6. Verfahren nach Anspruch 5, **dadurch gekennzeichnet, dass** die aktuell vorliegende Beschleunigung des Fahrzeugs erfasst wird, dass diese Beschleunigung gespeichert und bei einem erforderlichen Start des Verbrennungsmotors (2) als Sollbeschleunigung gesetzt wird, dass die Istbeschleunigung des Fahrzeugs erfasst und mit der Sollbeschleunigung verglichen wird, und dass in Abhängigkeit von dem Vergleich der beiden genannten Beschleunigungswerte die Drehzahl des Elektromotors (3) durch ein Ausgangssignal des Reglers (20) derart gesteuert wird, dass bei dem Schlupfstart des Verbrennungsmotors (2) die Beschleunigung des Fahrzeugs im Wesentlichen konstant bleibt.

7. Verfahren nach einem der vorhergehenden Ansprüche 5 bis 6, **dadurch gekennzeichnet, dass** das dem Elektromotor (3) zugeführte Steuersignal rampenförmig verläuft.

8. Verfahren nach einem der vorhergehenden Ansprüche 5 bis 7, **dadurch gekennzeichnet, dass** eine nach Einleitung eines Startvorgangs des Verbrennungsmotors (2) auftretende Änderung des Fahrerwunsches bei dem für die Steuerung des Elektromotors (3) bereitgestellten Steuersignal berücksichtigt wird.

9. Verfahren nach einem der vorhergehenden Ansprüche 5 bis 8, **dadurch gekennzeichnet, dass** die Solldrehzahl des Elektromotors (3) nach den folgenden Beziehungen festgelegt wird:

$$(1) \quad a_{Fzg} = \frac{r_{Rad}}{i_{Getriebe}} \omega_{ELM} \, ;$$

$$(2) \quad n_{Soll,ELM} = \frac{i}{2\pi r} \int a_{Soll,Fzg} dt \, , \text{ mit}$$

$a_{Fzg}$ = Längsbeschleunigung des Fahrzeugs
$r_{Rad}$ = Radradius
$i_{Getriebe}$ = Getriebeübersetzung
$\omega_{ELM}$ = Winkelgeschwindigkeit des Elektromotors
$n_{Soll,ELM}$ = Solldrehzahl des Elektromotors
$a_{soll,Fzg}$ = Sollwert der Längsbeschleunigung des Fahrzeugs.

**Claims**

1. Hybrid drive (200) having at least one internal combustion engine (2) and at least one electric motor (3), and having a clutch (5) which is arranged between the internal combustion engine (2) and the electric motor (3), **characterized in that** the hybrid drive (200) comprises a controller (20) which, in the event of slip-starting of the internal combustion engine (2), controls the torque of the electric motor (3) in such a way that the acceleration of the vehicle remains substantially constant during starting of the internal combustion engine (2), **characterized in that** the hybrid drive (200) comprises a first summation node (21), the output of this first summation node being connected to the controller (20) and it being possible for an actual acceleration and a setpoint acceleration to be supplied to the input of this first summation node.

2. Hybrid drive (200) according to Claim 1, **characterized by** means for detecting the vehicle acceleration, it being possible for the said means to be used to detect the acceleration of the vehicle and to supply the said acceleration of the vehicle to the input of a controller (20) at least during slip-starting of the internal combustion engine (2).

3. Hybrid drive (200) according to either of the preceding claims, **characterized in that** the means for detecting the acceleration comprise an acceleration sensor.

4. Hybrid drive (200) according to one of the preceding claims, **characterized in that** it comprises a second summation node (22), the output of this second summation node being connected to the electric motor (3) and it being possible for the output signal from the controller (20) and the driver's command to be supplied to the input of this second summation node.

5. Method for controlling a hybrid drive (200), which comprises at least an internal combustion engine (2) and an electric motor (3), for a motor vehicle, in which method the vehicle is driven at least temporarily solely by the electric motor (3) and the internal combustion engine (2) is started by so-called slip-starting if required, with an acceleration control system being activated for starting the internal combustion engine (2), **characterized in that** the hybrid drive (200) comprises a first summation node (21), the output of this first summation node being connected to the controller (20) and an actual acceleration and a setpoint acceleration being supplied to the input of this first summation node.

6. Method according to Claim 5, **characterized in that** the current acceleration of the vehicle is detected, **in that** this acceleration is stored and is set as the setpoint acceleration in the event of starting of the internal combustion engine (2) being required, **in that** the actual acceleration of the vehicle is detected and compared with the setpoint acceleration, and **in that**, depending on the comparison of the two said acceleration values, the rotation speed of the electric motor (3) is controlled by an output signal from the controller (20) in such a way that the acceleration of the vehicle remains substantially constant in the event of slip-starting of the internal combustion engine (2).

7. Method according to either of the preceding Claims 5 and 6, **characterized in that** the control signal which is supplied to the electric motor (3) runs in the form of a ramp.

8. Method according to one of the preceding Claims 5 to 7, **characterized in that** a change in the driver's command, which change occurs after initiation of the starting process of the internal combustion engine (2), is taken into account in the control signal which is provided for controlling the electric motor (3).

9. Method according to one of the preceding Claims 5 to 8, **characterized in that** the setpoint rotation speed of the electric motor (3) is defined in accordance with the following relationships:

$$(1) \quad \alpha_{veh} = \frac{r_{wheel}}{i_{transmission}} \omega_{ELM}$$

$$(2) \quad n_{set,ELM} = \frac{i}{2\pi r} \int a_{set,veh} dt \, ,$$

where

    $a_{veh}$ = Longitudinal acceleration of the vehicle
    $r_{wheel}$ = Wheel radius
    $i_{transmission}$ = Transmission ratio
    $\omega_{ELM}$ = Angular speed of the electric motor

$n_{set,ELM}$ = Setpoint rotation speed of the electric motor
$a_{set,veh}$ = Setpoint value of the longitudinal acceleration of the vehicle.

**Revendications**

1. Entraînement hybride (200) équipé d'au moins un moteur à combustion interne (2) et d'au moins un moteur électrique (3) ainsi que d'un embrayage (5) disposé entre le moteur à combustion interne (2) et le moteur électrique (3), **caractérisé en ce que** l'entraînement hybride (200) comprend un régulateur (20) qui régule le couple de rotation du moteur électrique (3) lors du démarrage glissant du moteur à combustion interne (2) de telle sorte que l'accélération du véhicule pendant le démarrage du moteur à combustion interne (2) reste pour l'essentiel constante, **caractérisé en ce que** l'entraînement hybride (200) comprend un premier noeud de sommation (21) relié au régulateur (20) du côté de la sortie et qu'une accélération réelle et une accélération théorique peuvent être amenées du côté de l'entrée.

2. Entraînement hybride (200) selon la revendication 1, **caractérisé par** la présence de moyens de détection de l'accélération du véhicule à l'aide desquels l'accélération du véhicule peut être détectée au moins pendant un démarrage glissant du moteur à combustion interne (2) et être amené à l'entrée d'un régulateur (20).

3. Entraînement hybride (200) selon l'une quelconque des revendications précédentes, **caractérisé en ce que** les moyens de détection de l'accélération comprennent un capteur d'accélération.

4. Entraînement hybride (200) selon l'une quelconque des revendications précédentes, **caractérisé en ce qu'**il comprend un deuxième noeud de sommation (22) relié du côté de la sortie au moteur électrique (3) et auquel peuvent être amenés du côté de l'entrée le signal de sortie du régulateur (20) et le souhait du conducteur.

5. Procédé de commande d'au moins un entraînement hybride (200) de véhicule automobile comprenant un moteur à combustion interne (2) et un moteur électrique (3), dans lequel le véhicule est entraîné au moins une partie du temps exclusivement par le moteur électrique (3) et dans lequel le moteur à combustion interne (2) est démarré en cas de besoin par le biais d'un démarrage appelé démarrage glissant, le démarrage du moteur à combustion interne (2) activant un système de régulation de l'accélération, **caractérisé en ce que** l'entraînement hybride (200) comprend un premier noeud de sommation (21) relié du côté de la sortie au régulateur (20) et auquel peuvent être amenées du côté de l'entrée une accélération réelle et une accélération théorique.

6. Procédé selon la revendication 5, **caractérisé en ce que** l'accélération réelle du véhicule est détectée, que cette accélération est mémorisée et qu'en cas de démarrage nécessaire du moteur à combustion interne (2), elle sert d'accélération théorique, que l'accélération réelle du véhicule est détectée et comparée à l'accélération théorique et qu'en fonction de la comparaison des deux valeurs d'accélération nommées, la vitesse de rotation du moteur électrique (3) est commandée par un signal de sortie du régulateur (20) de telle sorte que lors du démarrage glissant du moteur à combustion interne (2), l'accélération du véhicule reste pour l'essentiel constante.

7. Procédé selon l'une quelconque des revendications 5 à 6, **caractérisé en ce que** le signal de commande amené au moteur électrique (3) prend une forme de rampe.

8. Procédé selon l'une quelconque des revendications 5 à 7, **caractérisé en ce qu'**une modification du souhait du conducteur intervenant après le lancement d'un processus de démarrage du moteur à combustion interne (2) est pris en compte par le signal de commande mis à disposition pour commander le moteur électrique (3).

9. Procédé selon l'une quelconque des revendications 5 à 8, **caractérisé en ce que** la vitesse de rotation théorique du moteur électrique (3) est établie en fonction des relations suivantes :

$$(1) \quad a_{Fzg} = \frac{r_{Rad}}{i_{Getriebe}} \omega_{ELM} \; ;$$

$$(2) \quad n_{Soll,ELM} = \frac{i}{2\pi r} \int a_{Soll,Fzg}\, dt \,,$$

où :

$a_{Fzg}$ = accélération longitudinale du véhicule
$r_{Rad}$ = rayon de la roue
$i_{Getriebe}$ = changement de rapport de transmission
$\omega_{ELM}$ = vitesse angulaire du moteur électrique
$n_{Soll,ELM}$ = vitesse de rotation théorique du moteur électrique
$a_{Soll,Fzg}$ = valeur théorique de l'accélération longitudinale du véhicule.

## Fig. 1

## Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006048355
- US 2003001390 A
- FR 2886221
- DE 19814402